# EUROPEAN PATENT SPECIFICATION

(11) **EP 3 220 573 B1**
(45) Date of publication and mention of the grant of the patent: **10.04.2019**
(21) Application number: 15878558.4
(22) Date of filing: 19.08.2015
(51) Int. Cl.: H04L 9/08, H04W 4/12, H04L 12/58, G06F 21/62, H04L 9/06, H04L 29/06

(54) **METHOD AND SYSTEM FOR CONTROLLING ENCRYPTION OF INFORMATION AND ANALYZING INFORMATION AS WELL AS TERMINAL**
VERFAHREN UND SYSTEM ZUR STEUERUNG DER VERSCHLÜSSELUNG VON INFORMATIONEN UND ZUR ANALYSE VON INFORMATIONEN SOWIE ENDGERÄT
PROCÉDÉ ET SYSTÈME DE COMMANDE DE CHIFFREMENT D'INFORMATIONS ET D'ANALYSE D'INFORMATIONS ET DE TERMINAL

(30) Priority: 20.01.2015 CN 201510030707
(43) Date of publication of application: 20.09.2017
(73) Proprietor: ZTE Corporation, Shenzhen, Guangdong 518057 (CN)
(72) Inventor: ZHANG, Dongming, Shenzhen Guangdong 518057 (CN)
(74) Representative: HGF Limited
(86) International application number: PCT/CN2015/087536
(87) International publication number: WO 2016/115889

(56) References cited:
- WO-A2-2007/001237
- CN-A- 1 859 081
- CN-A- 102 752 808
- CN-A- 104 244 235
- CN-A- 104 660 589
- US-A1- 2002 138 740
- US-A1- 2008 247 546
- US-A1- 2013 073 866

## Description

### Technical Field

The present application relates to, but is not limited to, the field of communication technology.

### Background

With the rapid development of mobile Internet, smart phones have been popular at present. Social networking software based on smart phones, such as instant messaging software, has greatly changed means of communication of people.

However, in the communication process, some sensitive private information, such as bank card number, password, or important trade secrets that can only be known by the two sides, often needs to be sent. If the sensitive private information is sent in plaintext, there will be a security risk.

Therefore, in order to meet secrecy requirements of the private information involved in the instant messaging, a method of secure transmission of instant messages is required.

The documents US2008247546A1, WO2007001237A2, and US2002138740A1 have disclosed the related art of the present invention.

### Summary

The following is an overview of a subject described in detail herein. This overview is not intended to limit the protection scope of claims.

The present document provides methods, systems and terminals for controlling encryption of information and analyzing information so as to provide an encryption control and a time limitation control of information contents in instant messaging to ensure higher security and control flexibility of information transmission.

The present invention provides a method for controlling encryption of information, a method for analyzing information according to the method independent claims, and terminals based on the apparatus independent claims.

Also provided is a method for controlling encryption of information includes:
determining a content of a message required to be encrypted when it is detected that the message needs to be encrypted and transmitted;
combining and encrypting the content of the message required to be encrypted and a time parameter indicating a decryption time limit of the message to generate an encrypted data block; and
sending the message in which the encrypted data block is carried.

In an exemplary embodiment, the method further includes the following feature:
combining and encrypting the content of the message required to be encrypted and the time parameter indicating the decryption time limit of the message to generate the encrypted data block includes:
performing a first encryption process on the content of the message required to be encrypted to generate a content ciphertext; and combining the content ciphertext and the time parameter into a composite data block, and performing a second encryption process on the composite data block to generate a composite data block ciphertext, using the composite data block ciphertext as an encrypted data block to be sent.

In an exemplary embodiment, the method further includes the following feature:
combining and encrypting the content of the message required to be encrypted and the time parameter indicating the decryption time limit of the message to generate the encrypted data block includes:
combining the content of the message required to be encrypted and the time parameter indicating the decryption time limit of the message into a composite data block, and performing a third encryption process on the composite data block to generate a composite data block ciphertext, using the composite data block ciphertext as an encrypted data block to be sent.

In an exemplary embodiment, the method further includes the following feature:
combining and encrypting the content of the message required to be encrypted and the time parameter indicating the decryption time limit of the message to generate the encrypted data block includes:
performing a fourth encryption process on the content of the message required to be encrypted to generate a content ciphertext; and combining the content ciphertext and the time parameter into a composite data block plaintext, using the composite data block plaintext as an encrypted data block to be sent.

In an exemplary embodiment, the method further includes the following feature:
performing the first encryption process on the content of the message required to be encrypted to generate the content ciphertext includes:
after a user has set an encryption password, generating a first encryption key according to the encryption password, and performing the first encryption process on the content of the message required to be encrypted using the first encryption key to generate the content ciphertext; and when the user has not yet set an encryption password, prompting the user to set an encryption password, after the encryption password set by the user is obtained, generating the first encryption key according to the encryption password, and performing the first encryption process on the content of the message required to be encrypted using the first encryption key to generate the content ciphertext;
performing the second encryption process on the composite data block to generate the composite data block ciphertext includes:
   generating a second encryption key according to the encryption password, and performing the second encryption process on the composite data block using the second encryption key to generate the composite data block ciphertext.

In an exemplary embodiment, the method further includes the following feature:
performing the third encryption process on the composite data block to generate the composite data block ciphertext includes:
after the user has set an encryption password, generating a third encryption key according to the encryption password, and performing the third encryption process on the composite data block using the third encryption key to generate the composite data block ciphertext; and when the user has not yet set an encryption password, prompting the user to set an encryption password, after the encryption password set by the user is obtained, generating the third encryption key according to the encryption password, and performing the third encryption process on the composite data block using the third encryption key to generate the composite data block ciphertext.

In an exemplary embodiment, the method further includes the following feature:
the time parameter includes one or more of the following parameters: an upper limit value of a number of views, a view validity period, and a parameter indicating whether a receiving end needs to calibrate a time online.

In an exemplary embodiment, the method further includes the following feature:
the message is an instant message.

Also provided is a method for analyzing information including:
detecting whether a ciphertext and a time parameter indicating a decryption time limit of a message are carried in the message; and
controlling decryption of the ciphertext according to the time parameter when it is detected that the ciphertext and the time parameter indicating the decryption time limit of the message are carried in the message.

In an exemplary embodiment, the method further includes the following feature:
controlling decryption of the ciphertext according to the time parameter when it is detected that the ciphertext and the time parameter indicating the decryption time limit of the message are carried in the message includes:
when it is detected that an encrypted data block is carried in the message, prompting a user to input a decryption password, and after the decryption password input by the user is obtained, generating a first decryption key based on the decryption password, performing a first decryption process on the encrypted data block using the first decryption key, when the encrypted data block is decrypted successfully, extracting the time parameter indicating the decryption time limit of the message from the decrypted data block, when the time parameter is extracted successfully, determining whether a current time satisfies the decryption time limit indicated by the time parameter, and when the current time satisfies the decryption time limit indicated by the time parameter, generating a second decryption key based on the decryption password, decrypting a content ciphertext of the message contained in the encrypted data block using the second decryption key, and when the content ciphertext of the message is decrypted successfully, obtaining and displaying a content plaintext of the message.

In an exemplary embodiment, the method further includes the following feature:
controlling decryption of the ciphertext according to the time parameter when it is detected that the ciphertext and the time parameter indicating the decryption time limit of the message are carried in the message includes:
when it is detected that an encrypted data block is carried in the message, prompting the user to input a decryption password, and after the decryption password input by the user is obtained, generating a third decryption key based on the decryption password, performing a third decryption process on the encrypted data block using the third decryption key, when the encrypted data block is decrypted successfully, extracting the time parameter indicating the decryption time limit of the message from the decrypted data block, when the time parameter is extracted successfully, determining whether a current time satisfies the decryption time limit indicated by the time parameter, and when the current time satisfies the decryption time limit, obtaining and displaying a content plaintext of the message from the decrypted data block.

In an exemplary embodiment, the method further includes the following feature:
controlling decryption of the ciphertext according to the time parameter when it is detected that the ciphertext and the time parameter indicating the decryption time limit of the message are carried in the message includes:
extracting the time parameter indicating the decryption time limit of the message from the message, and when the time parameter is extracted successfully, determining whether a current time satisfies the decryption time limit indicated by the time parameter, prompting the user to input a decryption password when the current time satisfies the decryption time limit, generating a fourth decryption key according to the decryption password after the decryption password input by the user is obtained, and performing a fourth decryption process on a ciphertext contained in the message using the fourth decryption key, and obtaining and displaying a content plaintext of the message when the ciphertext is decrypted successfully.

In an exemplary embodiment, the method further includes the following feature:
controlling decryption of the ciphertext according to the time parameter further includes:
when a current time does not satisfy the decryption time limit, deactivating the message.

In an exemplary embodiment, the method further includes the following feature:
the deactivation includes any one of the following:
directly displaying the ciphertext contained in the message; or
scrambling and then displaying the ciphertext contained in the message; or
deleting the ciphertext in the message and displaying prompt information for prompting the user that a view validity period of the message has expired.

In an exemplary embodiment, the method further includes the following feature:
determining whether the current time satisfies the decryption time limit indicated by the time parameter includes:
when information indicating that a receiving end needs to calibrate a time online is contained in the time parameter, obtaining a standard value of a current time online, comparing the standard value of the current time with a decryption validity period contained in the time parameter, and when the standard value of the current time is within the decryption validity period, determining that the current time satisfies the decryption time limit;
when the information indicating that the receiving end does not need to calibrate a time online is contained in the time parameter, obtaining a value of a current time locally, comparing the value of the current time with the decryption validity period contained in the time parameter, and when the value of the current time is within the decryption validity period, determining that the current time satisfies the decryption time limit.

In an exemplary embodiment, the method further includes the following feature:
determining whether the current time satisfies the decryption time limit indicated by the time parameter includes:
when an upper limit value N of a number of views is contained in the time parameter, if N is limited, querying a view log of the message, comparing a number m of views stored in the view log with the upper limit value N of the number of views, and when the number m of views is less than the upper limit value N of the number of views, determining that a current time satisfies the decryption time limit.

Also provided is a system for controlling encryption of information including:
a first detection module configured to determine a content of a message required to be encrypted when it is detected that the message needs to be encrypted and transmitted;
an encryption control module configured to combine and encrypt the content of the message required to be encrypted and a time parameter indicating a decryption time limit of the message to generate an encrypted data block; and
a message sending module configured to send the message in which the encrypted data block is carried.

In an exemplary embodiment, the system further includes the following feature:
the encryption control module is configured to:
perform a first encryption process on the content of the message required to be encrypted to generate a content ciphertext;
combine the content ciphertext and the time parameter into a composite data block, and perform a second encryption process on the composite data block to generate a composite data block ciphertext, use the composite data block ciphertext as an encrypted data block to be sent.

In an exemplary embodiment, the system further includes the following feature:
the encryption control module is configured to:
combine the content of the message required to be encrypted and the time parameter indicating the decryption time limit of the message into a composite data block, and perform a third encryption process on the composite data block to generate a composite data block ciphertext, using the composite data block ciphertext as an encrypted data block to be sent.

In an exemplary embodiment, the system further includes the following feature:
the encryption control module is configured to: perform a fourth encryption process on the content of the message required to be encrypted to generate a content ciphertext; and combine the content ciphertext and the time parameter into a composite data block plaintext, use the composite data block plaintext as an encrypted data block to be sent.

In an exemplary embodiment, the system further includes the following feature:
the encryption control module is configured to: after a user has set an encryption password, generate a first encryption key according to the encryption password, and perform the first encryption process on the content of the message required to be encrypted using the first encryption key to generate the content ciphertext; and when the user has not yet set an encryption password, prompt the user to set an encryption password, after the encryption password set by the user is obtained, generate the first encryption key according to the encryption password, and perform the first encryption process on the content of the message required to be encrypted using the first encryption key to generate the content ciphertext.

The encryption control module is configured to perform the second encryption process on the composite data block to generate the composite data block ciphertext, including:
generating a second encryption key according to the encryption password, and performing the second encryption process on the composite data block using the second encryption key to generate the composite data block ciphertext.

In an exemplary embodiment, the system further includes the following feature:
the encryption control module is configured to: after the user has set an encryption password, generate a third encryption key according to the encryption password, and perform the third encryption process on the composite data block using the third encryption key to generate the composite data block ciphertext; and when the user has not yet set an encryption password, prompt the user to set an encryption password, after the encryption password set by the user is obtained, generate the third encryption key according to the encryption password, and perform the third encryption process on the composite data block using the third encryption key to generate the composite data block ciphertext.

In an exemplary embodiment, the system further includes the following feature:
the time parameter includes one or more of the following parameters: an upper limit value of a number of views, a view validity period, and a parameter indicating whether a receiving end needs to calibrate a time online.

In an exemplary embodiment, the system further includes the following feature:
the message is an instant message.

Also provided is a system for analyzing information including:
a second detection module configured to detect whether a ciphertext and a time parameter indicating a decryption time limit of a message are carried in the message; and
a decryption processing module configured to control decryption of the ciphertext according to the time parameter when it is detected that the ciphertext and the time parameter indicating the decryption time limit of the message are carried in the message.

In an exemplary embodiment, the system further includes the following feature:
the decryption processing module is configured to: when it is detected that an encrypted data block is carried in the message, prompt a user to input a decryption password, and after the decryption password input by the user is obtained, generate a first decryption key based on the decryption password, perform a first decryption process on the encrypted data block using the first decryption key, when the encrypted data block is decrypted successfully, extract the time parameter indicating the decryption time limit of the message from the decrypted data block, when the time parameter is extracted successfully, determine whether a current time satisfies the decryption time limit indicated by the time parameter, and when the current time satisfies the decryption time limit indicated by the time parameter, generate a second decryption key based on the decryption password, decrypt a content ciphertext of the message contained in the encrypted data block using the second decryption key, and when a content ciphertext of the message is decrypted successfully, obtain and display a content plaintext of the message.

In an exemplary embodiment, the system further includes the following feature:
the decryption processing module is configured to: when it is detected that an encrypted data block is carried in the message, prompt the user to input a decryption password, and after the decryption password input by the user is obtained, generate a third decryption key based on the decryption password, perform a third decryption process on the encrypted data block using the third decryption key, when the encrypted data block is decrypted successfully, extract the time parameter indicating the decryption time limit of the message from the decrypted data block, when the time parameter is extracted successfully, determine whether a current time satisfies the decryption time limit indicated by the time parameter, and when the current time satisfies the decryption time limit, obtain and display a content plaintext of the message from the decrypted data block.

In an exemplary embodiment, the system further includes the following feature:
the decryption processing module is configured to: extract the time parameter indicating the decryption time limit of the message from the message, and when the time parameter is extracted successfully, determine whether a current time satisfies the decryption time limit indicated by the time parameter, prompt the user to input a decryption password when the current time satisfies the decryption time limit, generate a fourth decryption key according to the decryption password after the decryption password input by the user is obtained, and perform a fourth decryption process on a ciphertext contained in the message using the fourth decryption key, and obtain and display a content plaintext of the message when the ciphertext is decrypted successfully.

In an exemplary embodiment, the system further includes the following feature:
the decryption processing module is configured to: when a current time does not satisfy the decryption time limit, deactivate the message.

In an exemplary embodiment, the system further includes the following feature:
the decryption processing module is configured to deactivate the message, including:
directly displaying the ciphertext contained in the message; or
scrambling and then displaying the ciphertext contained in the message; or
deleting the ciphertext in the message and displaying prompt information for prompting the user that a view validity period of the message has expired.

In an exemplary embodiment, the system further includes the following feature:
the decryption processing module is configured to:
when information indicating that a receiving end needs to calibrate a time online is contained in the time parameter, obtain a standard value of a current time online, compare the standard value of the current time with a decryption validity period contained in the time parameter, and when the standard value of the current time is within the decryption validity period, determine that the current time satisfies the decryption time limit;
when the information indicating that the receiving end does not need to calibrate a time online is contained in the time parameter, obtain a value of a current time locally, compare the value of the current time with the decryption validity period contained in the time parameter, and when the value of the current time is within the decryption validity period, determine that the current time satisfies the decryption time limit.

In an exemplary embodiment, the system further includes the following feature:
the decryption processing module is configured to: when an upper limit value N of a number of views is contained in the time parameter, if N is limited, query a view log of the message, compare a number m of views stored in the view log with the upper limit value N of the number of views, and when the number m of views is less than the upper limit value N of the number of views, determine that a current time satisfies the decryption time limit.

Also provided is a terminal including:
a first memory configured to store instructions;
a first processor, coupled to the first memory, configured to execute the instructions stored in the first memory, herein the first processor is configured to determine a content of a message required to be encrypted when it is detected that the message needs to be encrypted and transmitted; combine and encrypt the content of the message required to be encrypted and a time parameter indicating a decryption time limit of the message to generate an encrypted data block; and send the message in which the encrypted data block is carried.

In an exemplary embodiment, the terminal further includes the following feature:
the first processor is configured to combine and encrypt the content of the message required to be encrypted and the time parameter indicating the decryption time limit of the message to generate the encrypted data block, including:
performing a first encryption process on the content of the message required to be encrypted to generate a content ciphertext; and combining the content ciphertext and the time parameter into a composite data block, and performing a second encryption process on the composite data block to generate a composite data block ciphertext, using the composite data block ciphertext as an encrypted data block to be sent.

In an exemplary embodiment, the terminal further includes the following feature:
the first processor is configured to combine and encrypt the content of the message required to be encrypted and the time parameter indicating the decryption time limit of the message to generate the encrypted data block, including:
combining the content of the message required to be encrypted and the time parameter indicating the decryption time limit of the message into a composite data block, and performing a third encryption process on the composite data block to generate a composite data block ciphertext, using the composite data block ciphertext as an encrypted data block to be sent.

In an exemplary embodiment, the terminal further includes the following feature:
the first processor is configured to combine and encrypt the content of the message required to be encrypted and the time parameter indicating the decryption time limit of the message to generate the encrypted data block, including:
performing a fourth encryption process on the content of the message required to be encrypted to generate a content ciphertext; and combining the content ciphertext and the time parameter into a composite data block plaintext, using the composite data block plaintext as an encrypted data block to be sent.

In an exemplary embodiment, the terminal further includes the following feature:
the first processor is configured to perform the first encryption process on the content of the message required to be encrypted to generate the content ciphertext, including:
after a user has set an encryption password, generating a first encryption key according to the encryption password, and performing the first encryption process on the content of the message required to be encrypted using the first encryption key to generate the content ciphertext; and when the user has not yet set an encryption password, prompting the user to set an encryption password, after the encryption password set by the user is obtained, generating the first encryption key according to the encryption password, and performing the first encryption process on the content of the message required to be encrypted using the first encryption key to generate the content ciphertext;
the first processor is configured to perform the second encryption process on the composite data block to generate the composite data block ciphertext, including:
   generating a second encryption key according to the encryption password, and performing the second encryption process on the composite data block using the second encryption key to generate the composite data block ciphertext.

In an exemplary embodiment, the terminal further includes the following feature:
the first processor is configured to perform the third encryption process on the composite data block to generate the composite data block ciphertext, including:
after the user has set an encryption password, generating a third encryption key according to the encryption password, and performing the third encryption process on the composite data block using the third encryption key to generate the composite data block ciphertext; and when the user has not yet set an encryption password, prompting the user to set an encryption password, after the encryption password set by the user is obtained, generating the third encryption key according to the encryption password, and performing the third encryption process on the composite data block using the third encryption key to generate the composite data block ciphertext.

In an exemplary embodiment, the terminal further includes the following feature:
the time parameter includes one or more of the following parameters: an upper limit value of a number of views, a view validity period, and a parameter indicating whether a receiving end needs to calibrate a time online.

In an exemplary embodiment, the terminal further includes the following feature:
the message is an instant message.

Also provided is a terminal including:
a second memory configured to store instructions;
a second processor coupled to the second memory, configured to execute the instructions stored in the second memory, herein the second processor is configured to detect whether a ciphertext and a time parameter indicating a decryption time limit of a message are carried in the message; and control decryption of the ciphertext according to the time parameter when it is detected that the ciphertext and the time parameter indicating the decryption time limit of the message are carried in the message.

In an exemplary embodiment, the terminal further includes the following feature:
the second processor is configured to control decryption of the ciphertext according to the time parameter when it is detected that the ciphertext and the time parameter indicating the decryption time limit of the message are carried in the message, including:
when it is detected that an encrypted data block is carried in the message, prompting a user to input a decryption password, and after the decryption password input by the user is obtained, generating a first decryption key based on the decryption password, performing a first decryption process on the encrypted data block using the first decryption key, when the encrypted data block is decrypted successfully, extracting the time parameter indicating the decryption time limit of the message from the decrypted data block, when the time parameter is extracted successfully, determining whether a current time satisfies the decryption time limit indicated by the time parameter, and when the current time satisfies the decryption time limit indicated by the time parameter, generating a second decryption key based on the decryption password, decrypting a content ciphertext of the message contained in the encrypted data block using the second decryption key, and when a content ciphertext of the message is decrypted successfully, obtaining and displaying a content plaintext of the message.

In an exemplary embodiment, the terminal further includes the following feature:
the second processor is configured to control decryption of the ciphertext according to the time parameter when it is detected that the ciphertext and the time parameter indicating the decryption time limit of the message are carried in the message, including:
when it is detected that an encrypted data block is carried in the message, prompting the user to input a decryption password, and after the decryption password input by the user is obtained, generating a third decryption key based on the decryption password, performing a third decryption process on the encrypted data block using the third decryption key, when the encrypted data block is decrypted successfully, extracting the time parameter indicating the decryption time limit of the message from the decrypted data block, when the time parameter is extracted successfully, determining whether a current time satisfies the decryption time limit indicated by the time parameter, and when the current time satisfies the decryption time limit, obtaining and displaying a content plaintext of the message from the decrypted data block.

In an exemplary embodiment, the terminal further includes the following feature:
the second processor is configured to control decryption of the ciphertext according to the time parameter when it is detected that the ciphertext and the time parameter indicating the decryption time limit of the message are carried in the message, including:
extracting the time parameter indicating the decryption time limit of the message from the message, and when the time parameter is extracted successfully, determining whether a current time satisfies the decryption time limit indicated by the time parameter, prompting the user to input a decryption password when the current time satisfies the decryption time limit, generating a fourth decryption key according to the decryption password after the decryption password input by the user is obtained, and performing a fourth decryption process on the ciphertext contained in the message using the fourth decryption key, and obtaining and displaying a content plaintext of the message when the ciphertext is decrypted successfully.

In an exemplary embodiment, the terminal further includes the following feature:
the second processor is configured to control decryption of the ciphertext according to the time parameter, including:
when a current time does not satisfy the decryption time limit, deactivating the message.

In an exemplary embodiment, the terminal further includes the following feature:
the second processor is configured to deactivate the message, including:
directly displaying the ciphertext contained in the message; or
scrambling and then displaying the ciphertext contained in the message; or
deleting the ciphertext in the message and displaying prompt information for prompting the user that a view validity period of the message has expired.

In an exemplary embodiment, the terminal further includes the following feature:
the second processor is configured to determine whether the current time satisfies the decryption time limit indicated by the time parameter, including:
when information indicating that a receiving end needs to calibrate a time online is contained in the time parameter, obtaining a standard value of a current time online, comparing the standard value of a current time with a decryption validity period contained in the time parameter, and when the standard value of the current time is within the decryption validity period, determining that the current time satisfies the decryption time limit;
when the information indicating that the receiving end does not need to calibrate a time online is contained in the time parameter, obtaining a value of a current time locally, comparing the value of the current time with the decryption validity period contained in the time parameter, and when the value of the current time is within the decryption validity period, determining that the current time satisfies the decryption time limit.

In an exemplary embodiment, the terminal further includes the following feature:
the second processor is configured to determine whether the current time satisfies the decryption time limit indicated by the time parameter, including:
when an upper limit value N of a number of views is contained in the time parameter, if N is limited, querying a view log of the message, comparing a number m of views stored in the view log with the upper limit value N of the number of views, and when the number m of views is less than the upper limit value N of the number of views, determining that a current time satisfies the decryption time limit.

A computer readable storage medium having computer-executable instructions stored therein used to execute the methods described above.

In the methods, systems and terminals for controlling encryption of information and analyzing information provided by embodiments of the present invention, a sending end of an instant message needs to combine and transmit the content of the message to be encrypted and the time parameter indicating the decryption time limit of the message. After receiving the message carrying the ciphertext, a receiving end of an instant message decrypts the message, determines whether the current time is within the decryption validity period of the message, and decrypts the message if it is within the decryption validity period, and deactivates the message if it is not within the decryption validity period. The embodiments of the present invention can provide encryption control and time limit control for the information content in the instant communication to ensure higher security and control flexibility for information transmission.

Upon reading and understanding the accompanying drawings and detailed description, other aspects can be understood.

### Brief Description of Drawings

FIG. 1 is a flow chart of a method for controlling encryption of information in accordance with an embodiment of the present invention.
FIG. 2 is a flow chart of a method for analyzing information in accordance with an embodiment of the present invention.
FIG. 3 is a block diagram of a system for controlling encryption of information in accordance with an embodiment of the present invention.
FIG. 4 is a block diagram of a system for analyzing information in accordance with an embodiment of the present invention.
FIG. 5 is a block diagram of a terminal capable of controlling encryption of information in accordance with an embodiment of the present invention.
FIG. 6 is a block diagram of a terminal capable of analyzing information in accordance with an embodiment of the present invention.

### Detailed Description

Embodiments of the present document will be described in detail below in conjunction with accompanying drawings. It should be noted that the embodiments in the present invention and features in the embodiments can be combined with each other arbitrarily without conflict.

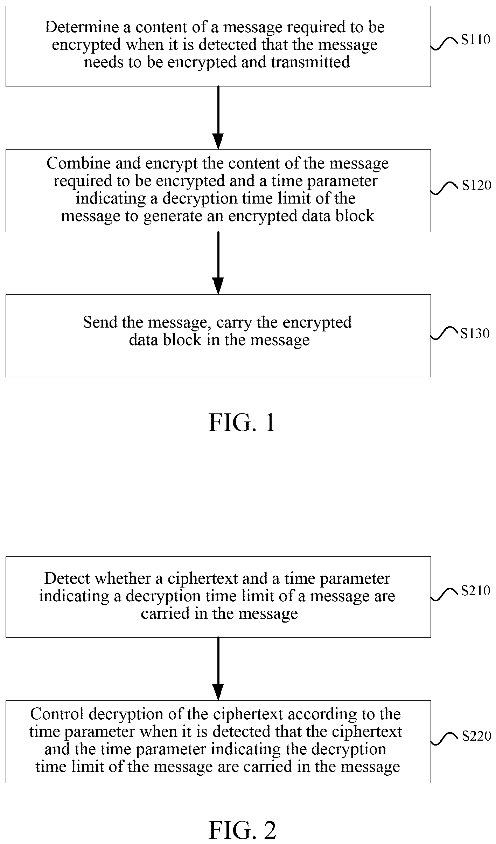

As shown in FIG. 1, an embodiment of the present invention provides a method for controlling encryption of information including the following steps.

At SI 10, a content of a message required to be encrypted is determined when it is detected that the message needs to be encrypted and transmitted.

At S120, the content of the message required to be encrypted and a time parameter indicating a decryption time limit of the message are combined and encrypted to generate an encrypted data block.

At S130, the message is sent, and the encrypted data block is carried in the message.

The method may further include the following features.

The message is an instant message.

The combining step of S120 includes: performing a first encryption process on the content of the message required to be encrypted to generate a content ciphertext; and combining the content ciphertext and the time parameter into a composite data block, and performing a second encryption process on the composite data block to generate a composite data block ciphertext, using the composite data block ciphertext as an encrypted data block to be sent.

The combining step of S120 includes: combining the content of the message required to be encrypted and the time parameter indicating the decryption time limit of the message into a composite data block, and performing a third encryption process on the composite data block to generate a composite data block ciphertext, using the composite data block ciphertext as an encrypted data block to be sent.

The combining step of S120 includes: performing a fourth encryption process on the content of the message required to be encrypted to generate a content ciphertext; and combining the content ciphertext and the time parameter into a composite data block plaintext, using the composite data block plaintext as an encrypted data block to be sent.

Performing the first encryption process on the content of the message required to be encrypted to generate the content ciphertext includes following operations.

After a user has set an encryption password, a first encryption key is generated according to the encryption password, and the first encryption process is performed on the content of the message required to be encrypted using the first encryption key to generate the content ciphertext. When the user has not yet set an encryption password, the user is prompted to set an encryption password. After the encryption password set by the user is obtained, the first encryption key is generated according to the encryption password, and the first encryption process is performed on the content of the message required to be encrypted using the first encryption key to generate the content ciphertext.

Performing the second encryption process on the composite data block to generate the composite data block ciphertext includes: generating a second encryption key according to the encryption password, and performing the second encryption process on the composite data block using the second encryption key to generate the composite data block ciphertext.

The first encryption key and the second encryption key may be the same or different.

An encryption algorithm for the first encryption process and an encryption algorithm for the second encryption process may be the same or different.

Performing the third encryption process on the composite data block to generate the composite data block ciphertext includes following operations.

After the user has set an encryption password, a third encryption key is generated according to the encryption password, and the third encryption process is performed on the composite data block using the third encryption key to generate the composite data block ciphertext. When the user has not yet set an encryption password, the user is prompted to set an encryption password. After the encryption password set by the user is obtained, the third encryption key is generated according to the encryption password, and the third encryption process is performed on the composite data block using the third encryption key to generate the composite data block ciphertext.

Performing the fourth encryption process on the content of the message required to be encrypted to generate the content ciphertext includes following operations.

After the user has set an encryption password, a fourth encryption key is generated according to the encryption password, and the fourth encryption process is performed on the content of the message required to be encrypted using the fourth encryption key to generate the content ciphertext. When the user has not yet set an encryption password, the user is prompted to set an encryption password. After the encryption password set by the user is obtained, the fourth encryption key is generated according to the encryption password, and the fourth encryption process is performed on the content of the message required to be encrypted using the fourth encryption key to generate the content ciphertext.

The time parameter includes one or more of the following parameters: an upper limit value of the number of views, a view validity period, and a parameter indicating whether a receiving end needs to calibrate a time online.

The upper limit value of the number of views can be limited or unlimited.

The view validity period can be expressed by a starting time and an effective duration, or can also be expressed by a starting time and a termination time.

Whether the receiving end needs to calibrate a time online means that whether the receiving end needs to obtain standard time online when viewing information. Due to difference between the local time of the receiving end and the standard time, the receiving end can improve accuracy of time limit control by obtaining the standard time online.

As shown in FIG. 2, an embodiment of the present invention provides a method for analyzing information including the following steps.

At S210, it is detected whether a ciphertext and a time parameter indicating a decryption time limit of a message are carried in the message.

At S220, decryption of the ciphertext is controlled according to the time parameter when it is detected that the ciphertext and the time parameter indicating the decryption time limit of the message are carried in the message.

The method of analyzing the information may further include the following features:
The message is an instant message.

The time parameter includes one or more of the following parameters: an upper limit value of the number of views, a view validity period, and a parameter indicating whether a receiving end needs to calibrate a time online.

The upper limit value of the number of views can be limited or unlimited.

The view validity period can be expressed by a starting time and an effective duration, or can also be expressed by a starting time and a termination time.

Whether the receiving end needs to calibrate a time online means that whether the receiving end needs to obtain standard time online when viewing information. Due to difference between the local time of the receiving end and the standard time, the receiving end can improve accuracy of time limit control by obtaining the standard time online.

The time parameter includes a marker character; when the message is analyzed, the time parameter is extracted according to the marker character.

In an embodiment, the step of S220 include following operations.

When it is detected that an encrypted data block is carried in the message, a user is prompted to input a decryption password. And after the decryption password input by the user is obtained, a first decryption key is generated based on the decryption password, a first decryption process is performed on the encrypted data block using the first decryption key. If the encrypted data block is decrypted successfully, the time parameter indicating the decryption time limit of the message is extracted from the decrypted data block. If the time parameter is extracted successfully, it is determined whether a current time satisfies the decryption time limit indicated by the time parameter. When the current time satisfies the decryption time limit indicated by the time parameter, a second decryption key is generated based on the decryption password, a content ciphertext of the message contained in the encrypted data block is decrypted using the second decryption key. If a content ciphertext of the message is decrypted successfully, a content plaintext of the message is obtained and displayed.

The first decryption key and the second decryption key may be the same or different.

A decryption algorithm for the first decryption process and a decryption algorithm for the second decryption process may be the same or different.

In an embodiment, the step of S220 include following operations.

When it is detected that an encrypted data block is carried in the message, the user is prompted to input a decryption password. After the decryption password input by the user is obtained, a third decryption key is generated based on the decryption password, a third decryption process is performed on the encrypted data block using the third decryption key. If the encrypted data block is decrypted successfully, the time parameter indicating the decryption time limit of the message is extracted from the decrypted data block. If the time parameter is extracted successfully, it is determined whether a current time satisfies the decryption time limit indicated by the time parameter. When the current time satisfies the decryption time limit, a content plaintext of the message is obtained from the decrypted data block and is displayed.

In an embodiment, the step of S220 include following operations.

The time parameter indicating the decryption time limit of the message is extracted from the message. If the time parameter is extracted successfully, it is determined whether a current time satisfies the decryption time limit indicated by the time parameter. The user is prompted to input a decryption password when the current time satisfies the decryption time limit. A fourth decryption key is generated according to the decryption password after the decryption password input by the user is obtained, and a fourth decryption process is performed on a ciphertext contained in the message using the fourth decryption key. A content plaintext of the message is obtained and displayed if the ciphertext is decrypted successfully.

Determining whether the current time satisfies the decryption time limit indicated by the time parameter includes the following operations.

When information indicating that a receiving end needs to calibrate a time online is contained in the time parameter, a standard value of a current time online is obtained, the standard value of the current time is compared with a decryption validity period contained in the time parameter. If the standard value of the current time is within the decryption validity period, it is determined that the current time satisfies the decryption time limit. When the information indicating that the receiving end does not need to calibrate a time online is contained in the time parameter, a value of a current time is obtained locally, the value of the current time is compared with the decryption validity period contained in the time parameter. If the value of the current time is within the decryption validity period, it is determined that the current time satisfies the decryption time limit.

Determining whether the current time satisfies the decryption time limit indicated by the time parameter includes the following operations.

When an upper limit value N of the number of views is contained in the time parameter, if N is limited, a view log of the message is queried, the number m of views stored in the view log is compared with the upper limit value N of the number of views. If the number m of views is less than the upper limit value N of the number of views, it is determined that a current time satisfies the decryption time limit.

Querying the view log of the message includes: querying the view log of the message locally or querying the view log of the message from the server via the network, herein the server is used to collect and save the view log of the message having a limit of the number of views.

Controlling decryption of the ciphertext according to the time parameter further includes: when a current time does not satisfy the decryption time limit, deactivating the message.

The deactivation includes any of the following: directly displaying the ciphertext contained in the message; or scrambling and then displaying the ciphertext contained in the message; or deleting the ciphertext in the message and displaying prompt information for prompting the user that a view validity period of the message has expired.

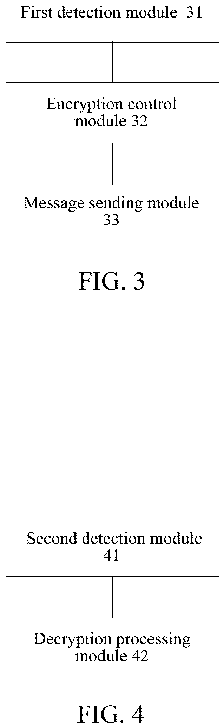

As shown in FIG. 3, an embodiment of the present invention provides a system for controlling encryption of information, including a first detection module 31, an encryption control module 32 and a message sending module 33.

The first detection module 31 is configured to determine a content of a message required to be encrypted when it is detected that the message needs to be encrypted and transmitted.

The encryption control module 32 is configured to combine and encrypt the content of the message required to be encrypted and a time parameter indicating a decryption time limit of the message to generate an encrypted data block.

The message sending module 33 is configured to send the message in which the encrypted data block is carried.

The system for controlling encryption of information may further include the following features.

The encryption control module 32 is configured to combine and encrypt the content of the message required to be encrypted and the time parameter indicating the decryption time limit of the message to generate the encrypted data block, including following operations.

A first encryption process is performed on the content of the message required to be encrypted to generate a content ciphertext; and the content ciphertext and the time parameter are combined into a composite data block. A second encryption process is performed on the composite data block to generate a composite data block ciphertext, using the composite data block ciphertext as an encrypted data block to be sent.

The encryption control module 32 is configured to combine and encrypt the content of the message required to be encrypted and the time parameter indicating the decryption time limit of the message to generate the encrypted data block, including following operations.

The content of the message required to be encrypted and the time parameter indicating the decryption time limit of the message are combined into a composite data block. A third encryption process is performed on the composite data block to generate a composite data block ciphertext, using the composite data block ciphertext as an encrypted data block to be sent.

The encryption control module 32 is configured to combine and encrypt the content of the message required to be encrypted and the time parameter indicating the decryption time limit of the message to generate the encrypted data block, including following operations.

A fourth encryption process is performed on the content of the message required to be encrypted to generate a content ciphertext. The content ciphertext and the time parameter are combined into a composite data block plaintext, using the composite data block plaintext as an encrypted data block to be sent.

The encryption control module 32 is configured to perform the first encryption process on the content of the message required to be encrypted to generate the content ciphertext, including following operations.

After a user has set an encryption password, a first encryption key is generated according to the encryption password, and the first encryption process is performed on the content of the message required to be encrypted using the first encryption key to generate the content ciphertext. When the user has not yet set an encryption password, the user is prompted to set an encryption password. After the encryption password set by the user is obtained, the first encryption key is generated according to the encryption password, and the first encryption process is performed on the content of the message required to be encrypted using the first encryption key to generate the content ciphertext.

The encryption control module 32 is configured to perform the second encryption process on the composite data block to generate the composite data block ciphertext, including following operations.

A second encryption key is generated according to the encryption password, and the second encryption process is performed on the composite data block using the second encryption key to generate the composite data block ciphertext.

The encryption control module 32 is configured to encrypt the composite data block to generate the composite data block ciphertext, including following operations.

After the user has set an encryption password, a third encryption key is generated according to the encryption password, and the third encryption process is performed on the composite data block using the third encryption key to generate the composite data block ciphertext. When the user has not yet set an encryption password, the user is prompted to set an encryption password. After the encryption password set by the user is obtained, the third encryption key is generated according to the encryption password, and the third encryption process is performed on the composite data block using the third encryption key to generate the composite data block ciphertext.

The time parameter includes one or more of the following parameters: an upper limit value of the number of views, view validity period, and a parameter indicating whether a receiving end needs to calibrate a time online.

The message is an instant message.

As shown in FIG. 4, an embodiment of the present invention further provides a system for analyzing information, including a second detection module 41 and a decryption processing module 42.

The second detection module 41 is configured to detect whether a ciphertext and a time parameter indicating a decryption time limit of a message are carried in the message.

The decryption processing module 42 is configured to control decryption of the ciphertext according to the time parameter when it is detected that the ciphertext and the time parameter indicating the decryption time limit of the message are carried in the message.

The system for analyzing the information may further include the following features.

The decryption processing module 42 is configured to control decryption of the ciphertext according to the time parameter when it is detected that the ciphertext and the time parameter indicating the decryption time limit of the message are carried in the message, including following operations.

When it is detected that an encrypted data block is carried in the message, a user is prompted to input a decryption password. After the decryption password input by the user is obtained, a first decryption key is generated based on the decryption password, a first decryption process is performed on the encrypted data block using the first decryption key. If the encrypted data block is decrypted successfully, the time parameter indicating the decryption time limit of the message is extracted from the decrypted data block. If the time parameter is extracted successfully, it is determined whether a current time satisfies the decryption time limit indicated by the time parameter. When the current time satisfies the decryption time limit indicated by the time parameter, a second decryption key is generated based on the decryption password, a content ciphertext of the message contained in the encrypted data block is decrypted using the second decryption key. If the content ciphertext of the message is decrypted successfully, a content plaintext of the message is obtained and displayed.

The decryption processing module 42 is configured to control decryption of the ciphertext according to the time parameter when it is detected that the ciphertext and the time parameter indicating the decryption time limit of the message are carried in the message, including following operations.

When it is detected that an encrypted data block is carried in the message, the user is prompted to input a decryption password. After the decryption password input by the user is obtained, a third decryption key is generated based on the decryption password, a third decryption process is performed on the encrypted data block using the third decryption key. If the encrypted data block is decrypted successfully, the time parameter indicating the decryption time limit of the message is extracted from the decrypted data block. If the time parameter is extracted successfully, it is determined whether a current time satisfies the decryption time limit indicated by the time parameter. When the current time satisfies the decryption time limit, a content plaintext of the message is obtained from the decrypted data block and displayed.

The decryption processing module 42 is configured to control decryption of the ciphertext according to the time parameter when it is detected that the ciphertext and the time parameter indicating the decryption time limit of the message are carried in the message, including following operations.

The time parameter indicating the decryption time limit of the message is extracted from the message, and if the time parameter is extracted successfully, it is determined whether a current time satisfies the decryption time limit indicated by the time parameter, the user is prompted to input a decryption password when the current time satisfies the decryption time limit. A fourth decryption key is generated according to the decryption password after the decryption password input by the user is obtained, and a fourth decryption process is performed on the ciphertext contained in the message using the fourth decryption key, and a content plaintext of the message is obtained and displayed if the ciphertext is decrypted successfully.

The decryption processing module 42 is further configured to: when the current time does not satisfy the decryption time limit, deactivate the message.

The decryption processing module 42 is configured to deactivate the message, including: directly displaying the ciphertext contained in the message; or scrambling and then displaying the ciphertext contained in the message; or deleting the ciphertext in the message and displaying prompt information for prompting the user that a view validity period of the message has expired.

The decryption processing module 42 is configured to determine whether the current time satisfies the decryption time limit indicated by the time parameter, including following operations.

When information indicating that a receiving end needs to calibrate a time online is contained in the time parameter, a standard value of a current time is obtained, the standard value of the current time is compared with a decryption validity period contained in the time parameter, and if the standard value of the current time is within the decryption validity period, it is determined that the current time satisfies the decryption time limit. When the information indicating that the receiving end does not need to calibrate a time online is contained in the time parameter, a value of a current time is obtained locally, the value of the current time is compared with the decryption validity period contained in the time parameter, and if the value of the current time is within the decryption validity period, it is determined that the current time satisfies the decryption time limit.

The decryption processing module 42 is configured to determine whether the current time satisfies the decryption time limit indicated by the time parameter, including following operations.

When an upper limit value N of the number of views is contained in the time parameter, if N is limited, a view log of the message is queried, the number m of views stored in the view log is compared with the upper limit value N of the number of views, and if the number m of views is less than the upper limit value N of the number of views, it is determined that a current time satisfies the decryption time limit.

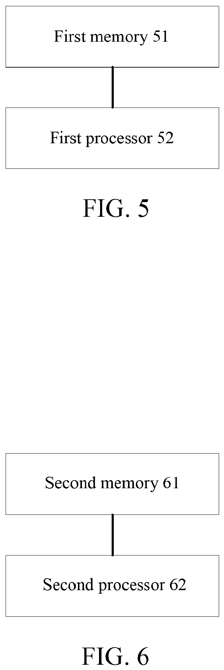

As shown in FIG. 5, an embodiment of the present invention provides a terminal, including a first memory 51 and a first processor 52.

The first memory 51 is configured to store instructions.

The first processor 52 is coupled to the first memory 51, the first processor 52 is configured to execute the instructions stored in the first memory 51, herein the first processor 52 is configured to determine a content of a message required to be encrypted when it is detected that the message needs to be encrypted and transmitted; combine and encrypt the content of the message required to be encrypted and a time parameter indicating a decryption time limit of the message to generate an encrypted data block; and send the message in which the encrypted data block is carried.

The terminal may further include the following features.

The first processor 52 is configured to combine and encrypt the content of the message required to be encrypted and the time parameter indicating the decryption time limit of the message to generate the encrypted data block, including following operations.

A first encryption process is performed on the content of the message required to be encrypted to generate a content ciphertext; and the content ciphertext and the time parameter are combined into a composite data block. A second encryption process is performed on the composite data block to generate a composite data block ciphertext, using the composite data block ciphertext as an encrypted data block to be sent.

The first processor 52 is configured to combine and encrypt the content of the message required to be encrypted and the time parameter indicating the decryption time limit of the message to generate the encrypted data block, including following operations.

The content of the message required to be encrypted and the time parameter indicating the decryption time limit of the message are combined into a composite data block, and a third encryption process is performed on the composite data block to generate a composite data block ciphertext, using the composite data block ciphertext as an encrypted data block to be sent.

The first processor 52 is configured to combine and encrypt the content of the message required to be encrypted and the time parameter indicating the decryption time limit of the message to generate the encrypted data block, including following operations.

A fourth encryption process is performed on the content of the message required to be encrypted to generate a content ciphertext; and the content ciphertext and the time parameter are combined into a composite data block plaintext, using the composite data block plaintext as an encrypted data block to be sent.

The first processor 52 is configured to perform the first encryption process on the content of the message required to be encrypted to generate the content ciphertext, including following operations.

After a user has set an encryption password, a first encryption key is generated according to the encryption password, and the first encryption process is performed on the content of the message required to be encrypted using the first encryption key to generate the content ciphertext. When the user has not yet set an encryption password, the user is prompted to set the encryption password. After the encryption password set by the user is obtained, the first encryption key is generated according to the encryption password, and the first encryption process is performed on the content of the message required to be encrypted using the first encryption key to generate the content ciphertext.

The first processor 52 is configured to perform the second encryption process on the composite data block to generate the composite data block ciphertext, including: generating a second encryption key according to the encryption password, and performing the second encryption process on the composite data block using the second encryption key to generate the composite data block ciphertext.

The first processor 52 is configured to perform the third encryption process on the composite data block to generate the composite data block ciphertext, including following operations.

After the user has set an encryption password, a third encryption key is generated according to the encryption password, and the third encryption process is performed on the composite data block using the third encryption key to generate the composite data block ciphertext. When the user has not yet set an encryption password, the user is prompted to set the encryption password. After the encryption password set by the user is obtained, the third encryption key is generated according to the encryption password, and the third encryption process is performed on the composite data block ciphertext required to be encrypted using the third encryption key to generate the composite data block ciphertext.

The time parameter includes one or more of the following parameters: an upper limit value of the number of views, a view validity period, and a parameter indicating whether a receiving end to calibrate a time online.

The message is an instant message.

As shown in FIG. 6, an embodiment of the present invention further provides a terminal, including a second memory 61 and a second processor 62.

The second memory 61 is configured to store instructions.

The second processor 62 is coupled to the second memory 61, the second processor 62 is configured to execute the instructions stored in the second memory, herein the second processor 62 is configured to detect whether a ciphertext and a time parameter indicating a decryption time limit of a message are carried in the message; and control decryption of the ciphertext according to the time parameter when it is detected that the ciphertext and the time parameter indicating the decryption time limit of the message are carried in the message.

The terminal further includes the following features.

The second processor 62 is configured to control decryption of the ciphertext according to the time parameter when it is detected that the ciphertext and the time parameter indicating the decryption time limit of the message are carried in the message, including following operations.

When it is detected that an encrypted data block is carried in the message, a user is prompted to input a decryption password. After the decryption password input by the user is obtained, a first decryption key is generated based on the decryption password, a first decryption process is performed on the encrypted data block using the first decryption key. If the encrypted data block is decrypted successfully, the time parameter indicating the decryption time limit of the message is extracted from the decrypted data block, if the time parameter is extracted successfully, it is determined whether a current time satisfies the decryption time limit indicated by the time parameter. When the current time satisfies the decryption time limit indicated by the time parameter, a second decryption key is generated based on the decryption password, a content ciphertext of the message contained in the encrypted data block is decrypted using the second decryption key. If the content ciphertext of the message is decrypted successfully, a content plaintext of the message is obtained and displayed.

The second processor 62 is configured to control decryption of the ciphertext according to the time parameter when it is detected that the ciphertext and the time parameter indicating the decryption time limit of the message are carried in the message, including following operations.

When it is detected that an encrypted data block is carried in the message, the user is prompted to input a decryption password. After the decryption password input by the user is obtained, a third decryption key is generated based on the decryption password, a third decryption process is performed on the encrypted data block using the third decryption key. If the encrypted data block is decrypted successfully, the time parameter indicating the decryption time limit of the message is extracted from the decrypted data block, if the time parameter is extracted successfully, it is determined whether a current time satisfies the decryption time limit indicated by the time parameter. When the current time satisfies the decryption time limit, a content plaintext of the message is obtained from the decrypted data block and is displayed.

The second processor 62 is configured to control decryption of the ciphertext according to the time parameter when it is detected that the ciphertext and the time parameter indicating the decryption time limit of the message are carried in the message, including following operations.

The time parameter indicating the decryption time limit of the message is extracted from the message, and if the time parameter is extracted successfully, it is determined whether a current time satisfies the decryption time limit indicated by the time parameter, the user is prompted to input a decryption password when the current time satisfies the decryption time limit. A fourth decryption key is generated according to the decryption password after the decryption password input by the user is obtained, and a fourth decryption process is performed on a ciphertext contained in the message using the fourth decryption key, and a content plaintext of the message is obtained and displayed if the ciphertext is decrypted successfully.

The second processor 62 is configured to control decryption of the ciphertext according to the time parameter, including: when a current time does not satisfy the decryption time limit, deactivating the message.

The second processor 62 is configured to deactivate the message, including: directly displaying the ciphertext contained in the message; or scrambling and then displaying the ciphertext contained in the message; or deleting the ciphertext in the message and displaying prompt information for prompting the user that a view validity period of the message has expired.

The second processor 62 is configured to determine whether the current time satisfies the decryption time limit indicated by the time parameter, including following operations.

When information indicating that a receiving end needs to calibrate a time online is contained in the time parameter, a standard value of a current time online is obtained, the standard value of the current time is compared with a decryption validity period contained in the time parameter, and if the standard value of the current time is within the decryption validity period, it is determined that the current time satisfies the decryption time limit. When the information indicating that the receiving end does not need to calibrate a time online is contained in the time parameter, a value of a current time locally is obtained, the value of the current time is compared with the decryption validity period contained in the time parameter, and if the value of the current time is within the decryption validity period, it is determined that the current time satisfies the decryption time limit.

The second processor 62 is configured to determine whether the current time satisfies the decryption time limit indicated by the time parameter, including following operations.

When an upper limit value N of the number of views is contained in the time parameter, if N is limited, a view log of the message is queried, the number m of views stored in the view log is compared with the upper limit value N of the number of views, and if the number m of views is less than the upper limit value N of the number of views, it is determined that a current time satisfies the decryption time limit.

In the methods, systems and terminals for encrypting and analyzing information provided by the embodiments of the present invention, a sending end of an instant message needs to combine and transmit the content of the message to be encrypted and the time parameter indicating the decryption time limit of the message. After receiving the message carrying the ciphertext, a receiving end of the instant message decrypts the message, determines whether the current time is within the decryption validity period of the message, and decrypts the message if it is within the decryption validity period, and deactivates the message if it is not within the decryption validity period. The embodiments of the present invention can provide encryption control and time limit control for the information content in the instant communication to ensure higher security and control flexibility for information transmission.

Those skilled in the art can understand that all or parts of steps of the above-mentioned embodiments can be implemented using computer program processes. The computer program can be stored in one computer readable storage medium. The computer program is executed on the corresponding hardware platform (e.g., system, equipment, apparatus, device, etc), and when the computer program is executed, one or a combination of steps of the method embodiments is included.

Alternatively, all or parts of steps of the above-mentioned embodiments can also be implemented using integrated circuits, these steps can be fabricated into individual integrated circuit modules respectively, or multiple modules or steps thereof are fabricated into a single integrated circuit to implement.

Devices/functional modules/functional units in the embodiments described above can be implemented using a general-purpose computing device. They can be centralized on a single computing device, or distributed in a network which consists of multiple computing devices.

Devices/functional modules/functional units in the embodiments described above, when implemented in the form of software functional module and sold or used as separate products, can be stored in one computer readable storage medium. The above-mentioned computer readable storage medium can be read-only memory, disk or compact disc, etc.

### Industrial Applicability

The embodiments of the present invention can provide encryption control and time limit control for the information content in the instant communication to ensure higher security and control flexibility for information transmission.

## Claims

1. A method for controlling encryption of information comprising:
determining (S110) a content of a message required to be encrypted when it is detected that the message needs to be encrypted and transmitted;
combining and encrypting (SI20) the content of the message required to be encrypted and a time parameter indicating a decryption time limit of the message to generate an encrypted data block; and
sending (S130) the message in which the encrypted data block is carried;
**characterised in that** the combining and encrypting the content of the message required to be encrypted and the time parameter indicating the decryption time limit of the message to generate the encrypted data block comprises:
performing a first encryption process on the content of the message required to be encrypted to generate a content ciphertext; and combining the content ciphertext and the time parameter into a composite data block, and performing a second encryption process on the composite data block to generate a composite data block ciphertext, using the composite data block ciphertext as an encrypted data block to be sent.

2. The method according to claim 1, wherein
performing the first encryption process on the content of the message required to be encrypted to generate the content ciphertext comprises:
after a user has set an encryption password, generating a first encryption key according to the encryption password, and performing the first encryption process on the content of the message required to be encrypted using the first encryption key to generate the content ciphertext; and when the user has not yet set an encryption password, prompting the user to set an encryption password, after the encryption password set by the user is obtained, generating the first encryption key according to the encryption password, and performing the first encryption process on the content of the message required to be encrypted using the first encryption key to generate the content ciphertext; and
performing the second encryption process on the composite data block to generate the composite data block ciphertext comprises:
generating a second encryption key according to the encryption password, and performing the second encryption process on the composite data block using the second encryption key to generate the composite data block ciphertext.

3. The method according to claim 1 or 2, wherein
the time parameter comprises one or more of the following parameters: an upper limit value of a number of views, a view validity period, and a parameter indicating whether a receiving end needs to calibrate a time online; and
the message is an instant message.

4. A method for analyzing information comprising:
detecting (S210) whether a ciphertext and a time parameter indicating a decryption time limit of a message are carried in the message; and
controlling (S220) decryption of the ciphertext according to the time parameter when it is detected that the ciphertext and the time parameter indicating the decryption time limit of the message are carried in the message;
**characterised in that** the controlling decryption of the ciphertext according to the time parameter when it is detected that the ciphertext and the time parameter indicating the decryption time limit of the message are carried in the message comprises:
when it is detected that an encrypted data block is carried in the message, prompting a user to input a decryption password, and after the decryption password input by the user is obtained, generating a first decryption key based on the decryption password, performing a first decryption process on the encrypted data block using the first decryption key, when the encrypted data block is decrypted successfully, extracting the time parameter indicating the decryption time limit of the message from the decrypted data block, when the time parameter is extracted successfully, determining whether a current time satisfies the decryption time limit indicated by the time parameter, and when the current time satisfies the decryption time limit indicated by the time parameter, generating a second decryption key based on the decryption password, decrypting a content ciphertext of the message contained in the encrypted data block using the second decryption key, and when a content ciphertext of the message is decrypted successfully, obtaining and displaying a content plaintext of the message.

5. The method according to claim 4, wherein
controlling decryption of the ciphertext according to the time parameter further comprises:
when a current time does not satisfy the decryption time limit, deactivating the message.

6. The method according to claim 5, wherein
the deactivation comprises any one of the following:
directly displaying the ciphertext contained in the message; or
scrambling and then displaying the ciphertext contained in the message; or
deleting the ciphertext in the message and displaying prompt information for prompting the user that a view validity period of the message has expired.

7. The method according to claim 4, wherein
determining whether the current time satisfies the decryption time limit indicated by the time parameter comprises:
when information indicating that a receiving end needs to calibrate a time online is contained in the time parameter, obtaining a standard value of a current time online, comparing the standard value of the current time with a decryption validity period contained in the time parameter, and when the standard value of the current time is within the decryption validity period, determining that the current time satisfies the decryption time limit; or
when the information indicating that the receiving end does not need to calibrate a time online is contained in the time parameter, obtaining a value of a current time locally, comparing the value of the current time with the decryption validity period contained in the time parameter, and when the value of the current time is within the decryption validity period, determining that the current time satisfies the decryption time limit; or
when an upper limit value N of a number of views is contained in the time parameter, if N is limited, querying a view log of the message, comparing a number m of views stored in the view log with the upper limit value N of the number of views, and when the number m of views is less than the upper limit value N of the number of views, determining that a current time satisfies the decryption time limit.

8. A terminal comprising:
a first memory (51) configured to store instructions;
a first processor (52), coupled to the first memory, configured to execute the instructions stored in the first memory, wherein the first processor is configured to determine a content of a message required to be encrypted when it is detected that the message needs to be encrypted and transmitted; combine and encrypt the content of the message required to be encrypted and a time parameter indicating a decryption time limit of the message to generate an encrypted data block; and send the message in which the encrypted data block is carried;
**characterised in that** the first processor is configured to perform a first encryption process on the content of the message required to be encrypted to generate a content ciphertext, combine the content ciphertext and the time parameter into a composite data block, perform a second encryption process on the composite data block to generate a composite data block ciphertext, and use the composite data block ciphertext as an encrypted data block to be sent.

9. A terminal comprising:
a second memory (61) configured to store instructions;
a second processor (62), coupled to the second memory, configured to execute the instructions stored in the second memory, wherein the second processor is configured to detect whether a ciphertext and a time parameter indicating a decryption time limit of a message are carried in the message; and control decryption of the ciphertext according to the time parameter when it is detected that the ciphertext and the time parameter indicating the decryption time limit of the message are carried in the message;
**characterised in that** the second processor is configured to:
prompt a user to input a decryption password when it is detected that an encrypted data block is carried in the message, generate a first decryption key based on the decryption password after the decryption password input by the user is obtained, perform a first decryption process on the encrypted data block using the first decryption key, extract the time parameter indicating the decryption time limit of the message from the decrypted data block when the encrypted data block is decrypted successfully, determine whether a current time satisfies the decryption time limit indicated by the time parameter when the time parameter is extracted successfully, and generate a second decryption key based on the decryption password when the current time satisfies the decryption time limit indicated by the time parameter, decrypt a content ciphertext of the message contained in the encrypted data block using the second decryption key, obtain and display a content plaintext of the message when a content ciphertext of the message is decrypted successfully.

10. A computer readable storage medium in which computer-executable instructions are stored and used to execute the method according to claim 1 or 4.

## Patentansprüche

1. Verfahren zur Steuerung der Verschlüsselung von Informationen, umfassend:
Bestimmen (S110) eines Inhalts einer zu verschlüsselnden Mitteilung, wenn detektiert wird, dass die Mitteilung verschlüsselt und übermittelt werden muss;
Kombinieren und Verschlüsseln (S120) des Inhalts der zu verschlüsselnden Mitteilung und eines Zeitparameters, der eine Entschlüsselungszeitgrenze der Mitteilung anzeigt, um einen verschlüsselten Datenblock zu generieren; und
Senden (S130) der Mitteilung, in der der verschlüsselte Datenblock übertragen wird;
**dadurch gekennzeichnet, dass** das
Kombinieren und Verschlüsseln des Inhalts der zu verschlüsselnden Mitteilung und des Zeitparameters, der eine Entschlüsselungszeitgrenze der Mitteilung anzeigt, um einen verschlüsselten Datenblock zu generieren, umfasst:
Durchführen eines ersten Verschlüsselungsprozesses am Inhalt der zu verschlüsselnden Mitteilung, um einen Inhaltsschlüsseltext zu generieren; und Kombinieren des Inhaltsschlüsseltexts und des Zeitparameters zu einem zusammengesetzten Datenblock, und Durchführen eines zweiten Verschlüsselungsprozesses am zusammengesetzten Datenblock, um einen zusammengesetzten Datenblockschlüsseltext zu generieren, Verwenden des zusammengesetzten Datenblockschlüsseltexts als einen zu sendenden verschlüsselten Datenblock.

2. Verfahren nach Anspruch 1, wobei
das Durchführen des ersten Verschlüsselungsprozesses am Inhalt der zu verschlüsselnden Mitteilung, um den Inhaltsschlüsseltext zu generieren, umfasst:
nachdem ein Nutzer ein Verschlüsselungskennwort eingestellt hat, Generieren eines ersten Verschlüsselungsschlüssels entsprechend dem Verschlüsselungskennwort und Durchführen des ersten Verschlüsselungsprozesses am Inhalt der zu verschlüsselnden Mitteilung mithilfe des ersten Verschlüsselungsschlüssels, um den Inhaltsschlüsseltext zu generieren; und wenn der Nutzer noch kein Verschlüsselungskennwort eingestellt hat, Auffordern des Nutzers, ein Verschlüsselungskennwort einzustellen, nach dem Erlangen des vom Nutzer eingestellten Verschlüsselungskennworts Generieren des ersten Verschlüsselungsschlüssels entsprechend dem Verschlüsselungskennwort und Durchführen des ersten Verschlüsselungsprozesses am Inhalt der zu verschlüsselnden Mitteilung mithilfe des ersten Verschlüsselungssschlüssels, um den Inhaltsschlüsseltext zu generieren; und
das Durchführen des zweiten Verschlüsselungsprozesses am zusammengesetzten Datenblock, um den zusammengesetzten Datenblockschlüsseltext zu generieren, umfasst:
Generieren eines zweiten Verschlüsselungsschlüssels entsprechend dem Verschlüsselungskennwort und Durchführen des zweiten Verschlüsselungsprozesses am zusammengesetzten Datenblock mithilfe des zweiten Verschlüsselungsschlüssels, um den zusammengesetzten Datenblockschlüsseltext zu generieren.

3. Verfahren nach Anspruch 1 oder 2, wobei
der Zeitparameter ein oder mehrere der folgenden Parameter umfasst: einen oberen Grenzwert einer Anzahl von Ansichten, einen Ansichtsgültigkeitszeitraum und einen Parameter, der anzeigt, ob ein Empfangsende eine Onlinezeit kalibrieren muss; und wobei die Mitteilung eine Sofortmitteilung ist.

4. Verfahren zum Analysieren von Informationen, umfassend:
Detektieren (S210), ob ein Schlüsseltext und ein Zeitparameter, der eine Entschlüsselungszeitgrenze einer Mitteilung anzeigt, in der Mitteilung übertragen werden; und
Steuern (S220) der Entschlüsselung des Schlüsseltexts entsprechend dem Zeitparameter, wenn detektiert wird, dass der Schlüsseltext und der Zeitparameter, der die Entschlüsselungszeitgrenze der Mitteilung anzeigt, in der Mitteilung übertragen werden; **dadurch gekennzeichnet, dass** das Steuern der Entschlüsselung des Schlüsseltexts entsprechend dem Zeitparameter, wenn detektiert wird, dass der Schlüsseltext und der Zeitparameter, der die Entschlüsselungszeitgrenze der Mitteilung anzeigt, in der Mitteilung übertragen werden, umfasst:
wenn detektiert wird, dass ein verschlüsselter Datenblock in der Mitteilung übertragen wird, Auffordern eines Nutzers, ein Entschlüsselungskennwort einzugeben, und nach dem Erlangen des vom Nutzer eingegebenen Entschlüsselungskennworts Generieren eines ersten Entschlüsselungsschlüssels basierend auf dem Entschlüsselungskennwort, Durchführen eines ersten Entschlüsselungsprozesses am verschlüsselten Datenblock mithilfe des ersten Entschlüsselungsschlüssels, wenn der verschlüsselte Datenblock erfolgreich entschlüsselt wird, Extrahieren des Zeitparameters, der die Entschlüsselungszeitgrenze der Mitteilung anzeigt, aus dem verschlüsselten Datenblock, wenn der Zeitparameter erfolgreich extrahiert wird, Bestimmen, ob eine aktuelle Zeit die vom Zeitparameter angezeigte Entschlüsselungszeitgrenze erfüllt, und wenn die aktuelle Zeit die vom Zeitparameter angezeigte Entschlüsselungszeitgrenze erfüllt, Generieren eines zweiten Entschlüsselungsschlüssels basierend auf dem Entschlüsselungskennwort, Entschlüsseln eines Inhaltschlüsseltexts der im verschlüsselten Datenblock enthaltenen Mitteilung mithilfe des zweiten Entschlüsselungsschlüssels, und wenn ein Inhaltsschlüsseltext der Mitteilung erfolgreich entschlüsselt wird, Erlangen und Anzeigen eines Inhaltsklartexts der Mitteilung.

5. Verfahren nach Anspruch 4, wobei
das Steuern des Entschlüsselns des Schlüsseltexts entsprechend dem Zeitparameter ferner umfasst:
wenn eine aktuelle Zeit die Entschlüsselungszeitgrenze nicht erfüllt, Deaktivieren der Mitteilung.

6. Verfahren nach Anspruch 5, wobei
die Deaktivierung eines der Folgenden umfasst:
direktes Anzeigen des in der Mitteilung enthaltenen Schlüsseltexts; oder
Verwürfeln und dann Anzeigen des in der Mitteilung enthaltenen Schlüsseltexts; oder
Löschen des Schlüsseltexts in der Mitteilung und Anzeigen von Aufforderungsinformationen zum Auffordern des Nutzers, dass ein Ansichtsgültigkeitszeitraum der Mitteilung abgelaufen ist.

7. Verfahren nach Anspruch 4, wobei
das Bestimmen, ob die aktuelle Zeit die vom Zeitparameter angezeigte Entschlüsselungszeitgrenze erfüllt, umfasst:
wenn im Zeitparameter Informationen enthalten sind, die anzeigen, dass ein Empfangsende eine Onlinezeit kalibrieren muss, Erlangen eines Standardwerts einer aktuellen Onlinezeit, Vergleichen des Standardwerts der aktuellen Zeit mit einem im Zeitparameter enthaltenen Entschlüsselungsgültigkeitszeitraum, und wenn der Standardwert der aktuellen Zeit innerhalb des Entschlüsselungsgültigkeitszeitraums liegt,
Bestimmen, dass die aktuelle Zeit die Entschlüsselungszeitgrenze erfüllt; oder,
wenn die Informationen, die anzeigen, dass das Empfangsende keine Onlinezeit kalibrieren muss, im Zeitparameter enthalten sind, lokales Erlangen einer aktuellen Zeit, Vergleichen des Werts der aktuellen Zeit mit einem im Zeitparameter enthaltenen Entschlüsselungsgültigkeitszeitraum, und wenn der Wert der aktuellen Zeit innerhalb des Entschlüsselungsgültigkeitszeitraums liegt, Bestimmen, dass die aktuelle Zeit die Entschlüsselungszeitgrenze erfüllt; oder
wenn ein oberer Grenzwert N einer Anzahl von Ansichten im Zeitparameter enthalten ist, wenn N beschränkt ist, Anfragen eines Ansichtsprotokolls der Mitteilung, Vergleichen einer Anzahl m der im Ansichtsprotokoll gespeicherten Ansichten mit dem oberen Grenzwert N der Anzahl von Ansichten, und wenn die Anzahl m der Ansichten geringer als der obere Grenzwert N der Anzahl von Ansichten ist, Bestimmen, dass eine aktuelle Zeit die Entschlüsselungszeitgrenze erfüllt.

8. Endgerät, umfassend:
einen ersten Speicher (51), der zum Speichern von Anweisungen konfiguriert ist;
einen ersten Prozessor (52), der mit dem ersten Speicher gekoppelt und konfiguriert ist, um die im ersten Speicher gespeicherten Anweisungen auszuführen, wobei der erste Prozessor konfiguriert ist, um einen Inhalt einer zu verschlüsselnden Mitteilung zu bestimmen, wenn detektiert wird, dass die Mitteilung verschlüsselt und übertragen werden muss; den Inhalt der zu verschlüsselnden Mitteilung und einen Zeitparameter, der eine Entschlüsselungszeitgrenze der Mitteilung anzeigt, zu kombinieren und zu verschlüsseln, um einen verschlüsselten Datenblock zu generieren; und die Mitteilung, in der der verschlüsselte Datenblock übertragen wird, zu senden;
**dadurch gekennzeichnet, dass**
der erste Prozessor konfiguriert ist, um einen ersten Verschlüsselungsprozess am Inhalt der zu verschlüsselnden Mitteilung durchzuführen, um einen Inhaltsschlüsseltext zu generieren; den Inhaltsschlüsseltext und den Zeitparameter zu einem zusammengesetzten Datenblock zu kombinieren, und einen zweiten Verschlüsselungsprozess am zusammengesetzten Datenblock durchzuführen, um einen zusammengesetzten Datenblockschlüsseltext zu generieren und den zusammengesetzten Datenblockschlüsseltext als einen zu sendenden verschlüsselten Datenblock zu verwenden.

9. Endgerät, umfassend:
einen zweiten Speicher (61), der zum Speichern von Anweisungen konfiguriert ist;
einen zweiten Prozessor (62), der mit dem zweiten Speicher gekoppelt und konfiguriert ist, um die im zweiten Speicher gespeicherten Anweisungen auszuführen, wobei der zweite Prozessor konfiguriert ist, um zu detektieren, ob ein Schlüsseltext und ein Zeitparameter, der eine Entschlüsselungszeitgrenze einer Mitteilung anzeigt, in der Mitteilung übertragen werden; und die Entschlüsselung des Schlüsseltexts entsprechend dem Zeitparameter zu steuern, wenn detektiert wird, dass der Schlüsseltext und der Zeitparameter, der die Entschlüsselungszeitgrenze der Mitteilung anzeigt, in der Mitteilung übertragen werden;
**dadurch gekennzeichnet, dass** der zweite Prozessor konfiguriert ist, um:
einen Nutzer zur Eingabe eines Entschlüsselungskennworts aufzufordern, wenn detektiert wird, dass ein verschlüsselter Datenblock in der Mitteilung übertragen wird, einen ersten Entschlüsselungsschlüssel basierend auf dem Entschlüsselungskennwort zu generieren, nachdem das vom Nutzer eingegebene Entschlüsselungskennwort erlangt wird, einen ersten Entschlüsselungsprozess am verschlüsselten Datenblock mithilfe des ersten Entschlüsselungsschlüssels durchzuführen, den Zeitparameter, der die Entschlüsselungszeitgrenze der Mitteilung anzeigt, aus dem entschlüsselten Datenblock zu extrahieren, wenn der verschlüsselte Datenblock erfolgreich entschlüsselt wird, zu bestimmen, ob eine aktuelle Zeit die vom Zeitparameter angezeigte Entschlüsselungszeitgrenze erfüllt, wenn der Zeitparameter erfolgreich extrahiert wird, und einen zweiten Entschlüsselungsschlüssel basierend auf dem Entschlüsselungskennwort zu generieren, wenn die aktuelle Zeit die vom Zeitparameter angezeigte Entschlüsselungszeitgrenze erfüllt, einen Inhaltsschlüsseltext der im verschlüsselten Datenblock enthaltenen Mitteilung mithilfe des zweiten Entschlüsselungsschlüssels zu entschlüsseln, einen Inhaltsklartext der Mitteilung zu erlangen und anzuzeigen, wenn ein Inhaltsschlüsseltext der Mitteilung erfolgreich entschlüsselt wird.

10. Computerlesbares Speichermedium, auf dem computerausführbare Anweisungen gespeichert und verwendet werden, um das Verfahren nach Anspruch 1 oder 4 auszuführen.

## Revendications

1. Procédé permettant de commander le chiffrement d'informations comprenant :
la détermination (S110) d'un contenu d'un message nécessitant d'être chiffré lorsque la nécessité de chiffrement et d'émission du message est détectée ;
la combinaison et le chiffrement (S120) du contenu du message nécessitant d'être chiffré et un paramètre de temps indiquant une limite de temps de déchiffrement du message pour générer un bloc de données chiffrées ; et
l'envoi (S130) du message dans lequel le bloc de données chiffrées est transporté ;
**caractérisé en ce que** :
la combinaison et le chiffrement du contenu du message nécessitant d'être chiffré et du paramètre de temps indiquant la limite de temps de déchiffrement du message pour générer le bloc de données chiffrées comprenant :
la mise en oeuvre d'un premier processus de chiffrement sur le contenu du message nécessitant d'être chiffré pour générer un texte chiffré de contenu ; et la combinaison du texte chiffré de contenu et du paramètre de temps dans un bloc de données composites, et la mise en oeuvre d'un second processus de chiffrement sur le bloc de données composites pour générer un texte chiffré de bloc de données composites, à l'aide du texte chiffré de bloc de données composites en tant que bloc de données chiffrées à envoyer.

2. Procédé selon la revendication 1,
ladite mise en oeuvre du premier processus de chiffrement sur le contenu du message nécessitant d'être chiffré pour générer le texte chiffré de contenu comprenant :
après qu'un utilisateur a défini un mot de passe de chiffrement, la génération d'une première clé de chiffrement selon le mot de passe de chiffrement et la mise en oeuvre du premier processus de chiffrement sur le contenu du message nécessitant d'être chiffré à l'aide de la première clé de chiffrement pour générer le texte chiffré de contenu ; et lorsque l'utilisateur n'a pas encore défini de mot de passe de chiffrement, la demande à l'utilisateur de définir un mot de passe de chiffrement, après que le mot de passe de chiffrement défini par l'utilisateur est obtenu, la génération de la première clé de chiffrement selon le mot de passe de chiffrement et la mise en oeuvre du premier processus de chiffrement sur le contenu du message nécessitant d'être chiffré en utilisant la première clé de chiffrement pour générer le texte chiffré de contenu ; et
ladite mise en oeuvre du second processus de chiffrement sur le bloc de données composites pour générer le texte chiffré de bloc de données composites comprenant :
la génération d'une seconde clé de chiffrement selon le mot de passe de chiffrement, et la mise en oeuvre du second processus de chiffrement sur le bloc de données composites à l'aide de la seconde clé de chiffrement pour générer le texte chiffré de bloc de données composite.

3. Procédé selon la revendication 1 ou 2,
ledit paramètre de temps comprenant un ou plusieurs des paramètres suivants : une valeur limite supérieure d'un nombre de vues, une période de validité de visualisation et un paramètre indiquant si une extrémité de réception nécessite l'étalonnage d'une heure en ligne ; et ledit message étant un message instantané.

4. Procédé permettant l'analyse d'informations comprenant :
la détection (S210) pour savoir si un texte chiffré et un paramètre de temps indiquant une limite de temps de déchiffrement d'un message sont transportés dans le message ; et
la commande (S220) du déchiffrement du texte chiffré selon le paramètre de temps lorsque la présence du texte chiffré et du paramètre de temps indiquant la limite de temps de déchiffrement transporté dans le message a été détectée ; **caractérisé en ce que** la commande du déchiffrement du texte chiffré selon le paramètre de temps lorsque la présence du texte chiffré et du paramètre de temps indiquant la limite de temps de déchiffrement transportés dans le message a été détectée, comprenant :
lorsque la présence d'un bloc de données chiffrées transporté dans le message est détecté, la demande à un utilisateur de saisir un mot de passe de déchiffrement, et après que le mot de passe de déchiffrement saisi par l'utilisateur est obtenu, la génération d'une première clé de déchiffrement sur la base du mot de passe de déchiffrement, la mise en oeuvre d'un premier processus de déchiffrement sur le bloc de données chiffrées à l'aide de la première clé de déchiffrement, lorsque le bloc de données chiffrées est déchiffré avec succès, l'extraction à partir du bloc de données déchiffré du paramètre de temps indiquant la limite de temps de déchiffrement du message, lorsque le paramètre de temps est extrait avec succès, la détermination pour savoir si une heure actuelle satisfait la limite de temps de déchiffrement indiquée par le paramètre de temps et, lorsque l'heure actuelle satisfait la limite de temps de déchiffrement indiquée par le paramètre de temps, la génération d'une seconde clé de déchiffrement sur la base du mot de passe de déchiffrement, le déchiffrement d'un texte chiffré de contenu du message contenu dans le bloc de données chiffrées à l'aide de la seconde clé de déchiffrement, et lorsqu'un texte chiffré de contenu du message est déchiffré avec succès, l'obtention et l'affichage du texte en clair du contenu du message.

5. Procédé selon la revendication 4,
ladite commande du déchiffrement du texte chiffré selon le paramètre de temps comprenant en outre :
lorsqu'une heure actuelle ne satisfait pas la limite de temps de déchiffrement, la désactivation du message.

6. Procédé selon la revendication 5,
ladite désactivation comprenant l'un quelconque des suivants :
l'affichage directement du texte chiffré contenu dans le message ; ou
le brouillage et ensuite l'affichage du texte chiffré contenu dans le message ; ou
la suppression du texte chiffré dans le message et l'affichage des informations rapides pour rappeler à l'utilisateur qu'une période de validité d'affichage du message a expiré.

7. Procédé selon la revendication 4,
ladite détermination pour savoir si l'heure actuelle satisfait la limite de temps de déchiffrement indiquée par le paramètre de temps comprenant :
lorsque des informations indiquant qu'une extrémité de réception nécessite l'étalonnage d'une heure en ligne sont contenues dans le paramètre de temps, l'obtention d'une valeur standard d'une heure actuelle en ligne, la comparaison de la valeur standard de l'heure actuelle avec une période de validité de déchiffrement contenue dans le paramètre de temps, et lorsque la valeur standard de l'heure actuelle est comprise dans les limites de la période de validité de déchiffrement, la détermination que l'heure actuelle satisfait
la limite de temps de déchiffrement ; ou
lorsque les informations indiquant que l'extrémité de réception ne nécessite pas d'étalonnage d'une heure en ligne sont contenues dans le paramètre de temps, l'obtention d'une valeur d'une heure actuelle localement, la comparaison de la valeur de l'heure actuelle avec la période de validité de déchiffrement contenue dans le paramètre de temps, et lorsque la valeur de l'heure actuelle est comprise dans les limites de la période de validité de déchiffrement, la détermination que l'heure actuelle satisfait la limite de temps de déchiffrement ; ou
lorsqu'une valeur limite supérieure N d'un nombre de vues est contenue dans le paramètre de temps, si N est limité, la demande d'un journal de visualisation de message, la comparaison d'un nombre m de vues stockées dans le journal de visualisation avec la valeur limite supérieure N du nombre de vues et lorsque le nombre m de vues est inférieur à la valeur limite supérieure N du nombre de vues, la détermination qu'une heure actuelle satisfait la limite de temps de déchiffrement.

8. Terminal comprenant :
une première mémoire (51) configurée pour stocker des instructions ;
un premier processeur (52), couplé à la première mémoire, configuré pour exécuter les instructions stockées dans la première mémoire, ledit premier processeur étant configuré pour déterminer le contenu d'un message nécessitant d'être chiffré lorsque la nécessité du chiffrement et de l'émission du message est détectée ; combiner et chiffrer le contenu du message nécessitant d'être chiffré et d'un paramètre de temps indiquant une limite de temps de déchiffrement du message pour générer un bloc de données chiffrées ; et envoyer le message dans lequel le bloc de données chiffrées est transporté ; **caractérisé en ce que**
le premier processeur est configuré pour mettre en oeuvre un premier processus de chiffrement sur le contenu du message nécessitant d'être chiffré pour générer un texte chiffré de contenu, combiner le texte chiffré de contenu et le paramètre de temps dans un bloc de données composites, mettre en oeuvre un second processus de chiffrement sur le bloc de données composites pour générer un texte chiffré de bloc de données composites et utiliser le texte chiffré de bloc de données composite en tant que bloc de données chiffrées à envoyer.

9. Terminal comprenant :
une seconde mémoire (61) configurée pour stocker des instructions ;
un second processeur (62), couplé à la seconde mémoire, configuré pour exécuter les instructions stockées dans la seconde mémoire, ledit second processeur étant configuré pour détecter si un texte chiffré et un paramètre de temps indiquant une limite de temps de déchiffrement d'un message sont transportés dans le message ; et commander le déchiffrement du texte chiffré selon le paramètre de temps lorsque la présence du texte chiffré et du paramètre de temps indiquant la limite de temps de déchiffrement du message transportés dans le message est détectée ;
**caractérisé en ce que** le second processeur est configuré pour :
demander à un utilisateur de saisir un mot de passe de déchiffrement lorsque la présence d'un bloc de données chiffrées transportée dans le message est détectée, générer une première clé de déchiffrement selon le mot de passe de déchiffrement après que le mot de passe de déchiffrement saisi par l'utilisateur est obtenu, mettre en oeuvre un premier processus de déchiffrement sur le bloc de données chiffrées à l'aide de la première clé de déchiffrement, extraire du bloc de données déchiffrées le paramètre de temps indiquant la limite de temps de déchiffrement du message lorsque le bloc de données chiffrées est déchiffré avec succès, déterminer si une heure actuelle satisfait la limite de temps de déchiffrement indiquée par le paramètre de temps lorsque le paramètre de temps est extrait avec succès et générer une seconde clé de déchiffrement sur la base du mot de passe de déchiffrement lorsque l'heure actuelle satisfait la limite de temps de déchiffrement indiquée par le paramètre de temps, déchiffrer un texte chiffré de contenu du message contenu dans le bloc de données chiffrées à l'aide de la seconde clé de déchiffrement, obtenir et afficher un texte clair de contenu du message lorsqu'un texte chiffré de contenu du message est déchiffré avec succès.

10. Support de stockage lisible par ordinateur dans lequel des instructions exécutables par ordinateur sont stockées et utilisées pour exécuter ledit procédé selon la revendication 1 ou 4.
